# EUROPEAN PATENT SPECIFICATION

(11) **EP 2 551 096 B1**
(45) Date of publication and mention of the grant of the patent: **08.07.2015**
(21) Application number: 12169259.4
(22) Date of filing: 24.05.2012
(51) Int. Cl.: B29D 30/30, B29D 30/16, B60C 9/18, B60C 9/22

(54) **Pneumatic tire production method and tire**
Luftreifenherstellungsverfahren und Reifen
Procédé de production de pneu et pneu

(30) Priority: 28.07.2011 JP 2011165562
(43) Date of publication of application: 30.01.2013
(73) Proprietor: SUMITOMO RUBBER INDUSTRIES LIMITED, Kobe-shi, Hyogo-ken (JP)
(72) Inventor: Hashimoto, Keisuke, Kobe-shi, Hyogo 651-0072 (JP)
(74) Representative: Manitz, Finsterwald & Partner GbR

(56) References cited:
- EP-A1- 0 462 733
- EP-A1- 1 612 058
- EP-A2- 1 022 119
- WO-A1-2009/113583

## Description

### BACKGROUND OF THE INVENTION

### Field of the Invention

The present invention relates to a pneumatic tire production method.

### Description of the Related Art

An outer surface of a tread forms a tread surface. Grooves are typically formed in the tread surface. Thus, a tread pattern is formed. The grooves are formed by projections provided on a cavity surface of a mold being pressed against a raw cover (unvulcanized tire). The example of method for forming the tread is disclosed in JP2008-284815 (US2008/0283166).

A belt of a tire is typically covered by a band. The band contains a cord. The cord extends substantially in the circumferential direction, and is helically wound. The band has a so-called jointless structure. The band holds the belt. Thus, lifting of the belt is restrained.

The band is formed by a ribbon being helically wound. The ribbon is formed of a cord and a topping rubber. Tires including bands and production methods for producing such tires have been variously suggested. The examples of such tires and production methods are disclosed in JP2002-144815 and JP2009-051417.

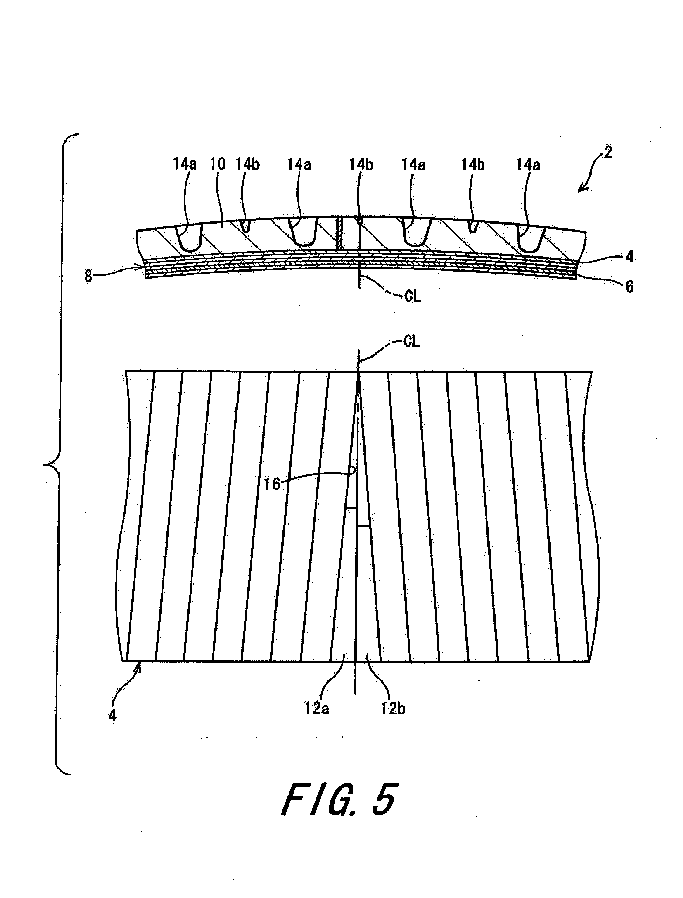

FIG. 5 shows a cross-section of a tire 2 including a band 4, and a state in which the band 4 of the tire 2 is formed by using a conventional production method. In FIG. 5, an alternate long and short dash line CL represents the equator plane of the tire 2. The band 4 is located between a tread 10 and a belt 8 layered over a carcass 6. The band 4 is formed with the use of a first ribbon 12a and a second ribbon 12b. The first ribbon 12a is helically wound from the equator plane toward a first end (not shown) of the belt 8. The second ribbon 12b is helically wound from the equator plane toward a second end (not shown) of the belt 8.

As shown in FIG. 5, the tire 2 includes a plurality of main grooves 14a and a plurality of sub-grooves 14b. The main grooves 14a extend in the circumferential direction. As shown in FIG. 5, none of the main grooves 14a is formed on the equator plane of the tire 2.

Each of the first ribbon 12a and the second ribbon 12b is slightly slanted relative to the equator plane. Therefore, a portion (hereinafter, referred to as a gap 16) having neither the first ribbon 12a nor the second ribbon 12b put thereon is formed in an area in which winding of the first ribbon 12a and the second ribbon 12b is started, in the conventional production method.

As described above, the first ribbon 12a is helically wound from the equator plane toward the first end of the belt 8. The second ribbon 12b is helically wound from the equator plane toward the second end of the belt 8. Therefore, the gap 16 is located on the equator plane. Portions that include the gap 16 and portions that do not include the gap 16 are mixedly formed on the equator plane of the tire 2. In other words, an unevenness is formed in the equator portion of the tire 2 due to the gap 16. As described above, none of the main grooves 14a is formed on the equator of the tire 2. Therefore, the unevenness affects a uniformity of the tire 2.

The tire 2 is poor in uniformity.

EP 0 462 733 A1 discloses a pneumatic radial tire suitable for highspeed running including a tread having a plurality of main grooves extending in a circumferential direction and comprising at least two main belt layers and an auxiliary belt layer formed by helically and continuously winding a ribbon-like ply. EP 1 612 058 A1 discloses a pneumatic tire for two-wheeled motor vehicles having a belt layer comprising a belt ply in which steel courts are spirally wound. A tread reinforcing layer on the belt layer comprises a reinforcing ply in which organic fiber cords are aligned substantially parallel to the tire circumferential direction. In EP 1 022 119 A2 a method is disclosed for manufacturing a band layer by helically winding a ribbon on a drum carrying a belt layer. WO 2009/113583 A1 describes a radial tire for vehicles and a method for manufacturing the same comprising the formation of a reinforcing layer formed by winding two ribbons containing an organic fiber cord.

An object of the present invention is to make available a pneumatic tire excellent in uniformity.

### SUMMARY OF THE INVENTION

The present invention is directed to a pneumatic tire production method for producing a tire including: a tread having a plurality of main grooves that extend in a circumferential direction, and that are not formed on a tire equator; a band located inwardly of the tread in a radial direction; and a belt located inwardly of the band in the radial direction. The pneumatic tire production method is implemented in a former including: a rotatable cylindrical drum; a first head, movable in an axial direction, for feeding a first ribbon; and a second head, movable in the axial direction, for feeding a second ribbon. The pneumatic tire production method includes the steps of:
(1) forming a belt by a sheet being wound around the rotatable cylindrical drum,
(2) layering the first ribbon fed by the first head and the second ribbon fed by the second head, over the belt, so as to locate an end of the first ribbon and an end of the second ribbon vertically below a reference main groove, in which the reference main groove is a main grove closest to the tire equator among the plurality of main grooves; and
(3) helically winding the first ribbon by the drum being rotated and the first head being moved toward a first end of the belt in the axial direction, and helically winding the second ribbon by the drum being rotated and the second head being moved toward a second end of the belt in the axial direction.

Each of the first ribbon and the second ribbon includes a cord extending in a length direction thereof.

Preferably, in the pneumatic tire production method,
in the step of layering the first ribbon and the second ribbon,
the first ribbon is layered over the belt such that, at the end of the first ribbon, an edge of the first ribbon on a side of the second end of the belt is located inwardly of an edge of the reference main groove on a side of the first end of the belt, in the axial direction, and the second ribbon is layered over the belt such that, at the end of the second ribbon, an edge of the second ribbon on a side of the first end of the belt is located outwardly of an edge of the reference main groove on a side of the second end of the belt, in the axial direction.

Preferably, in the pneumatic tire production method, each of the plurality of main grooves has a width that is greater than or equal to 5.0 mm, and is not greater than 15.0 mm, and has a depth that is greater than or equal to 6.0 mm, and is not greater than 12.0 mm.

A pneumatic tire according to the present invention includes: a tread having a plurality of main grooves that extend in a circumferential direction; a band located inwardly of the tread in a radial direction; and a belt located inwardly of the band in the radial direction. None of the plurality of main grooves is formed on a tire equator. The band is formed by using a first ribbon and a second ribbon. A main groove closest to the tire equator among the plurality of main grooves is used as a reference main groove, and the first ribbon and the second ribbon are layered over the belt such that an end of the first ribbon and an end of the second ribbon are located vertically below the reference main groove. The first ribbon is helically wound around the belt toward a first end of the belt. The second ribbon is helically wound around the belt toward a second end of the belt. Each of the first ribbon and the second ribbon includes a cord extending in a length direction thereof.

Preferably, in the pneumatic tire, the band is formed such that, at the end of the first ribbon, an edge of the first ribbon on a side of the second end of the belt is located inwardly of an edge of the reference main groove on a side of the first end of the belt, in an axial direction, and, at the end of the second ribbon, an edge of the second ribbon on a side of the first end of the belt is located outwardly of an edge of the reference main groove on a side of the second end of the belt, in the axial direction.

Preferably in the pneumatic tire, each of the plurality of main grooves has a width that is greater than or equal to 5.0 mm, and is not greater than 15.0 mm, and has a depth that is greater than or equal to 6.0 mm, and is not greater than 12.0 mm.

### BRIEF DESCRIPTION OF THE DRAWINGS

FIG. 1 is a cross-sectional view of a portion of a pneumatic tire according to an embodiment of the present invention;
FIG. 2 is a perspective cross-sectional view of a portion of a ribbon used for forming a band of the tire shown in FIG. 1;
FIG. 3 is a plan view illustrating a state in which formation of the band of the tire shown in FIG. 1 is started;
FIG. 4 is a plan view illustrating a state in which the band of the tire shown in FIG. 1 is formed; and
FIG. 5 is a plan view illustrating a state in which a band is formed in a conventional tire production method.

### DESCRIPTION OF THE PREFERRED EMBODIMENTS

The following will describe in detail the present invention based on preferred embodiments with reference to the accompanying drawing.

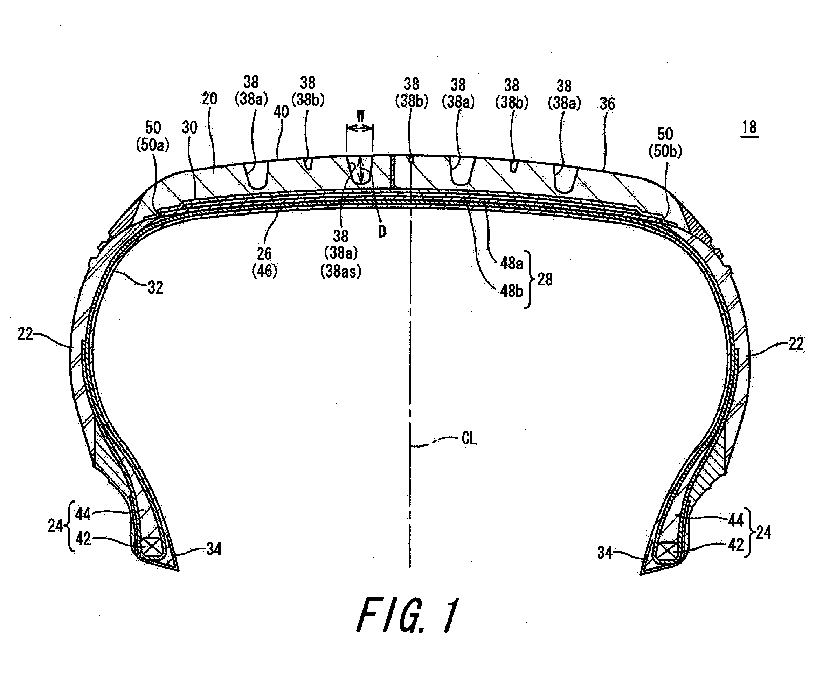

A tire 18 shown in FIG. 1 includes a tread 20, sidewalls 22, beads 24, a carcass 26, a belt 28, a band 30, an inner liner 32, and chafers 34. The tire 18 is of a tubeless type. The tire 18 is mounted to a passenger car.

In FIG. 1, the upward/downward direction represents the radial direction, the leftward/rightward direction represents the axial direction, and the direction orthogonal to the surface of the sheet represents the circumferential direction. The tire 18 has a shape which is almost bilaterally symmetric about an alternate long and short dash line CL shown in FIG. 1. The alternate long and short dash line CL represents the equator plane of the tire 18.

The tread 20 is formed of a vulcanized rubber excellent in abrasion resistance. The tread 20 has a shape projecting outward in the radial direction. The tread 20 includes a tread surface 36. The tread surface 36 can contact with a road surface.

Grooves 38 are formed in the tread surface 36 of the tire 18. Thus, a tread pattern is formed. A portion of the tread surface 36 does not include the grooves 38, and the portion is referred to as a land. The tread surface 36 includes the grooves 38 and a land 40.

In the tread surface 36 of the tire 18, a plurality of main grooves 38a and a plurality of sub-grooves 38b are formed. In the present embodiment, the number of the main grooves 38a is four, and the number of the sub-grooves 38b is three. The main grooves 38a extend in the circumferential direction. The widths of the main grooves 38a are equal to each other. The depths of the main grooves 38a are equal to each other. In FIG. 1, a double-headed arrow W represents a width of each main groove 38a. A double-headed arrow D represents a depth of each main groove 38a. In the tire 18, the width W of each main groove 38a is greater than or equal to 5.0 mm, and is not greater than 15.0 mm. The depth D of each main groove 38a is greater than or equal to 6.0 mm, and is not greater than 12.0 mm.

The sub-grooves 38b extend in the circumferential direction. The width of each sub-groove 38b is less than the width of each main groove 38a. The width of each sub-groove 38b is less than 5.0 mm. The depth of each sub-groove 38b is less than the depth of each main groove 38a. The depth of each sub-groove 38b is less than 6.0 mm.

As shown in the drawings, the tire 18 does not have any one of the main grooves 38a on the equator. In the present embodiment described herein, the main groove 38a closest to the tire equator among the plurality of main grooves 38a aligned with each other in the axial direction is represented as a main groove 38as, the main groove 38as is referred to as a reference main groove.

The sidewalls 22 extend from edges, respectively, of the tread 20 in almost the radially inward direction. The sidewalls 22 are formed of a vulcanized rubber. The sidewalls 22 absorb impact from a road surface due to their flexure. Further, the sidewalls 22 prevent injury of the carcass 26.

The beads 24 are located almost inwardly of the sidewalls 22, respectively, in the radial direction. Each bead 24 includes a core 42, and an apex 44 extending from the core 42 outward in the radial direction. The core 42 is formed so as to be ring-shaped. The core 42 is formed so as to be wound with a non-stretchable wire. A steel wire is typically used for the core 42. The apex 44 is tapered outward in the radial direction. The apex 44 is formed of a highly hard vulcanized rubber.

The carcass 26 includes a carcass ply 46. The carcass ply 46 extends on and between the beads 24 located on both sides. The carcass ply 46 extends under and along the tread 20 and the sidewalls 22. The carcass ply 46 is turned up around each core 42 from the inner side to the outer side in the axial direction.

The carcass ply 46 is formed of multiple cords aligned with each other, and a topping rubber, which is not shown. An absolute value of an angle of each cord relative to the equator plane usually ranges from 70 degrees to 90 degrees. In other words, the carcass 26 forms a radial structure. The cords are typically formed of an organic fiber. Examples of the preferable organic fiber include polyester fibers, nylon fibers, rayon fibers, polyethylene naphthalate fibers, and aramid fibers. The carcass 26 forming a bias structure may be used.

The belt 28 is located inwardly of the band 30 in the radial direction. The belt 28 is located outwardly of the carcass 26 in the radial direction. The belt 28 is layered over the carcass 26. The belt 28 reinforces the carcass 26. The belt 28 includes an inner layer 48a and an outer layer 48b. Each of the inner layer 48a and the outer layer 48b includes multiple cords aligned with each other and a topping rubber, which is not shown. Each cord is tilted relative to the equator plane. An absolute value of the tilt angle is greater than or equal to 10 degrees, and is not greater than 35 degrees. The direction in which the cord of the inner layer 48a is tilted is opposite to the direction in which the cord of the outer layer 48b is tilted. A preferable material of the cords is a steel. An organic fiber may be used for the cords.

The band 30 is located inwardly of the tread 20 in the radial direction. The band 30 covers the belt 28. In the tire 18, the band 30 extends from the equator plane toward an end 50 of the belt 28. The band 30 extends from a first end 50a of the belt 28 to a second end 50b of the belt 28 in the axial direction. The band 30 is a full band. The band 30 is formed of a cord and a topping rubber. The cord extends substantially in the circumferential direction, and is helically wound. The band 30 has a so-called jointless structure. The belt 28 is held by the cord, so that lifting of the belt 28 is restrained. The cord is typically formed of an organic fiber. Examples of the preferable organic fiber include nylon fibers, polyester fibers, rayon fibers, polyethylene naphthalate fibers, and aramid fibers.

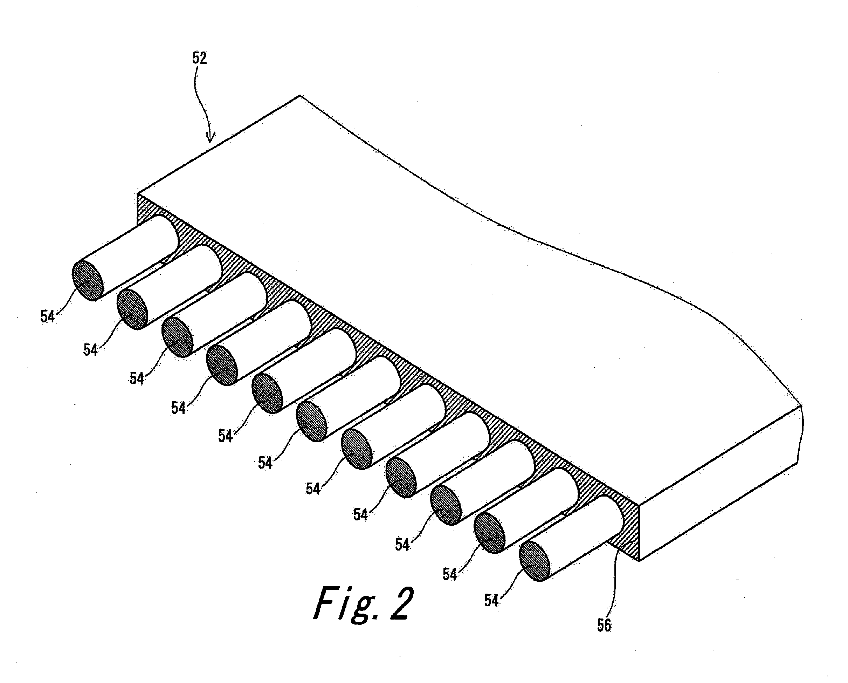

For the tire 18, the band 30 is formed with the use of a ribbon 52 shown in FIG. 2. The ribbon 52 includes a plurality of cords 54, and a topping rubber 56. Each cord 54 extends in the length direction of the ribbon 52. As shown in the drawings, in the tire 18, the number of the cords 54 included in the ribbon 52 is eleven. The number of the cords 54 included in the ribbon 52, and the width of the ribbon 52 are determined in consideration of processability and the like as necessary.

The tire 18 is produced in the following manners. The plurality of cords 54 are extruded together with the topping rubber 56, to obtain the ribbon 52. In this production method, the number of the ribbons 52 prepared is two. The ribbons 52 are supplied to a former (not shown) with other components.

The former includes a cylindrical drum, a first head, and a second head. The drum is rotatable. The first head feeds one (hereinafter, referred to as a first ribbon 52a) of the two ribbons 52 having been prepared, and the first head is movable in the axial direction. The second head feeds the other (hereinafter, referred to as a second ribbon 52b) of the two ribbons 52, and the second head is movable in the axial direction. In the former, the first head and the second head are independently movable.

In this production method, the drum is rotated to wind the carcass ply 46 around the drum. Thus, the carcass ply 46 having a cylindrical shape is formed. A first sheet is wound around the carcass ply 46 having the cylindrical shape, to form the inner layer 48a which forms one part of the belt 28. A second sheet is wound around the inner layer 48a, to form the outer layer 48b which forms the other part of the belt 28. Thus, the belt 28 is obtained. The first ribbon 52a and the second ribbon 52b are wound on and around the belt 28, to form the band 30.

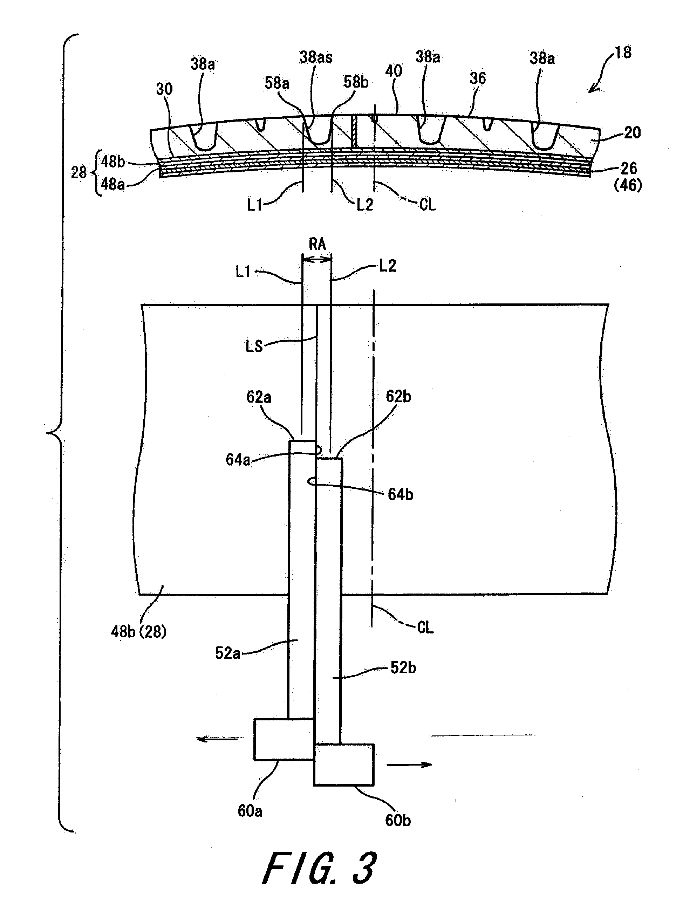

FIG. 3 shows a portion of the cross-section of the tire 18 shown in FIG. 1, and a state in which the formation of the band 30 is started. In FIG. 3, a solid line L1 represents a first plane that passes through an edge 58a of the reference main groove 38as on the side of the first end 50a of the belt 28, and extends parallel to the equator plane. A solid line L2 represents a second plane that passes through an edge 58b of the reference main groove 38as on the side of the second end 50b of the belt 28, and extends parallel to the equator plane. In FIG. 3, an area from the first plane L1 to the second plane L2 is represented by a double-headed arrow RA. The area RA on the belt 28 is located vertically below the reference main groove 38as in the tire 18. The width of the area RA is equal to the width of the reference main groove 38as. A solid line LS represents the center of the area RA in the width direction. The location of the center LS matches the location of the center of the reference main groove 38as in the width direction.

In this production method, the first ribbon 52a is fed from the first head 60a. The second ribbon 52b is fed from the second head 60b. An end 62a of the first ribbon 52a and an end 62b of the second ribbon 52b are put on the area RA.

In this production method, a mark representing the center LS of the area RA is indicated on the belt 28 so as to layer the first ribbon 52a and the second ribbon 52b. In other words, a mark representing the center of the reference main groove 38as is indicated on the belt 28. In this production method, an edge 64a (hereinafter, referred to as a first edge) of the first ribbon 52a on the side of the second end 50b of the belt 28 is aligned with the center LS, at the end 62a of the first ribbon 52a. In this production method, the first ribbon 52a is layered over the belt 28 such that the first edge 64a is located inwardly of the first plane L1 in the axial direction.

In this production method, the second ribbon 52b is layered so as to be located adjacent to the first ribbon 52a. At this time, an edge 64b (hereinafter, referred to as a second edge) of the second ribbon 52b on the side of the first end 50a of the belt 28 is aligned with the center LS, at the end 62b of the second ribbon 52b. In this production method, the second ribbon 52b is layered over the belt 28 such that the second edge 64b is located outwardly of the second plane L2 in the axial direction. In this production method, the end 62a of the first ribbon 52a and the end 62b of the second ribbon 52b are put on the belt 28, thereby starting the formation of the band 30.

In this production method, when rotation of the drum is started, the first head 60a is moved toward the first end 50a of the belt 28 in the axial direction while feeding the first ribbon 52a. Since the first head 60a is moved in the axial direction while the drum is being rotated, the first ribbon 52a is helically wound.

In this production method, when the rotation of the drum is started, the second head 60b is moved toward the second end 50b of the belt 28 in the axial direction while feeding the second ribbon 52b. Since the second head 60b is moved in the axial direction while the drum is being rotated, the second ribbon 52b is helically wound.

In this production method, when the first ribbon 52a reaches the first end 50a of the belt 28, winding of the first ribbon 52a is ended. When the second ribbon 52b reaches the second end 50b of the belt 28, winding of the second ribbon 52b is ended. In this production method, the band 30 is thus formed so as to cover the belt 28 from the first end 50a to the second end 50b. Components such as the tread 20 are further combined therewith, to obtain a raw cover (also referred to as an unvulcanized tire).

In this production method, the raw cover is put into a mold (not shown). Thus, the outer surface of the raw cover abuts against a cavity surface of the mold. The inner surface of the raw cover abuts against a bladder or a core. The raw cover is pressurized and heated in the mold. A rubber composition of the raw cover flows by pressurizing and heating process being performed. A crosslinking reaction occurs in the rubber by the heating process being performed, to obtain the tire 18.

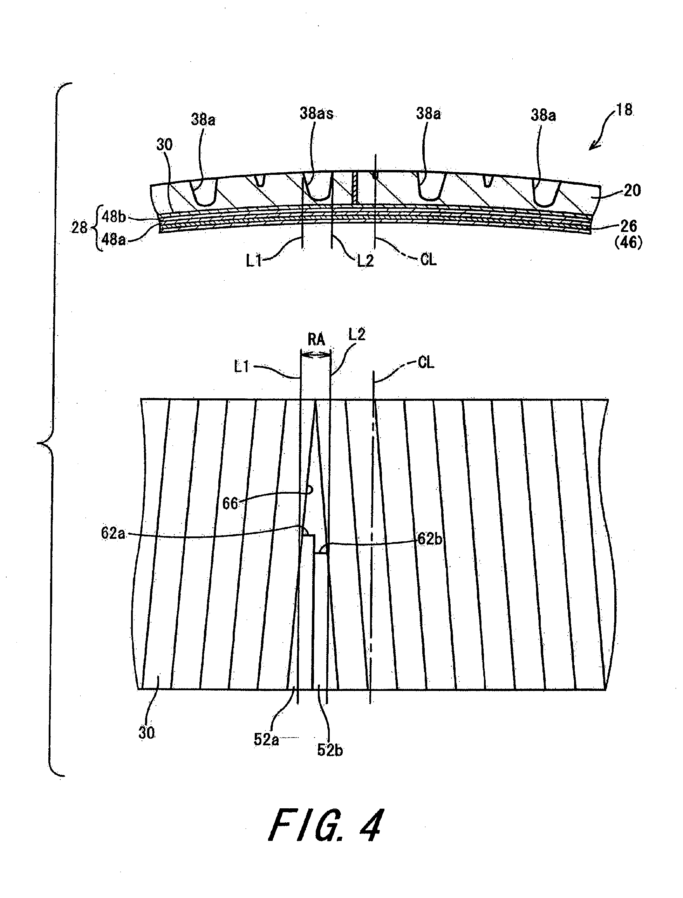

FIG. 4 shows a portion of the cross-section of the tire 18 shown in FIG. 1, and a state in which the band 30 is formed. As shown in FIG. 4, in the band 30, a portion (hereinafter, referred to as a gap 66) that has neither the first ribbon 52a nor the second ribbon 52b put thereon is formed between a portion formed of the first ribbon 52a and a portion formed of the second ribbon 52b.

In this production method, winding of the first ribbon 52a and the second ribbon 52b is started in the area RA on the belt 28. As described above, the area RA is located vertically below the reference main groove 38as in the tire 18. Therefore, the gap 66 is located vertically below the reference main groove 38as. None of the main grooves 38a is formed in the equator portion of the tread 20. In this production method, the gap 66 is not formed in the equator portion having none of the main grooves 38a formed therein. In the tire 18, an unevenness caused by the gap 66 does not occur vertically below the equator. In the tire 18, a uniformity is restrained from being affected by the gap 66 formed in a portion in which winding of the first ribbon 52a and the second ribbon 52b is started. This production method can contribute to improvement of uniformity of the tire 18 that does not have any one of the main grooves 38a on the equator.

In the tire 18, the main groove 38a is located vertically above the gap 66. In other words, the main groove 38a is located between a road surface and the gap 66. Therefore, uniformity is less likely to be affected by the unevenness caused by the gap 66. In the tire 18, the uniformity is restrained from being affected by the gap 66. This production method can contribute to improvement of uniformity of the tire 18 that does not have any one of the main grooves 38a on the equator.

In this production method, in the process step of layering the first ribbon 52a and the second ribbon 52b, it is preferable that the first ribbon 52a is layered so as to locate the first edge 64a of the first ribbon 52a inwardly of the first plane L1 in the axial direction, and the second ribbon 52b is layered so as to locate the second edge 64b of the second ribbon 52b outwardly of the second plane L2 in the axial direction. Thus, the entirety of the gap 66 formed between the portion formed of the first ribbon 52a and the portion formed of the second ribbon 52b is located vertically below the reference main groove 38as. In the tire 18, uniformity is effectively restrained from being affected by the gap 66. This production method can contribute to improvement of uniformity of the tire 18 that does not have any one of the main grooves 38a on the equator.

In this production method, in the process step of layering the first ribbon 52a and the second ribbon 52b, as shown in FIG. 3, it is more preferable that the first ribbon 52a is layered over the belt 28 such that the first edge 64a is aligned with the center LS, and the second ribbon 52b is layered over the belt 28 such that the second edge 64b is aligned with the center LS. Thus, the size of the gap 66 formed between the portion formed of the first ribbon 52a and the portion formed of the second ribbon 52b can be minimized. In this production method, the tire 18 can be formed so as to minimize influence of the gap 66 on the uniformity. This production method can contribute to improvement of uniformity of the tire 18 that does not have any one of the main grooves 38a on the equator.

In this production method, the winding of the first ribbon 52a and the second ribbon 52b is started at a position that is shifted in the axial direction from the equator plane toward the first end 50a of the belt 28. Therefore, the number of times the first ribbon 52a is wound by the first head 60a is less than the number of times the second ribbon 52b is wound by the second head 60b. As described above, in this production method, the main groove closest to the tire equator among the plurality of main grooves 38a formed on the tread 20 is used as a reference main groove, and is represented as the main groove 38as, and winding of the first ribbon 52a and the second ribbon 52b is started in a portion vertically below the reference main groove 38as. Therefore, in this production method, a difference between the number of times the first ribbon 52a is wound by the first head 60a, and the number of times the second ribbon 52b is wound by the second head 60b, is minimized. In this production method, reduction of productivity due to the difference between the number of times the first ribbon 52a is wound by the first head 60a, and the number of times the second ribbon 52b is wound by the second head 60b, is effectively restrained. In this production method, uniformity of the tire 18 that does not have any one of the main grooves 38a on the equator is effectively improved without reducing productivity.

In the present invention, the dimensions and angles of the components of the tire 18 are measured in a state where the tire 18 is assembled in a normal rim, and the tire 18 is filled with air so as to obtain a normal internal pressure. During the measurement, no load is applied to the tire 18. In the description of the present invention, the normal rim represents a rim which is specified according to the standard with which the tire 18 complies. The "standard rim" in the JATMA standard, the "Design Rim" in the TRA standard, and the "Measuring Rim" in the ETRTO standard are included in the normal rim. In the description of the present invention, the normal internal pressure represents an internal pressure which is specified according to the standard with which the tire 18 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are included in the normal internal pressure. In the case of the tire 18 for use in passenger cars, the dimensions and angles are measured in a state where the internal pressure is 180 kPa.

### EXAMPLES

Hereinafter, effects of the present invention will become apparent according to examples. However, the present invention should not be restrictively construed based on the description of examples.

### [Example 1]

A pneumatic tire having the structure shown in FIG. 1 was produced. The size of the tire was "185/60R15 84H". In order to produce the pneumatic tire, in a former having the cylindrical drum, the first head, and the second head, a sheet was wound around the drum, to form a belt. A first ribbon fed by the first head and a second ribbon fed by the second head were layered over the belt such that an end of the first ribbon and an end of the second ribbon were located vertically below the reference main groove as, as shown in FIG. 3. While the drum was being rotated, the first head was moved toward a first end of the belt in the axial direction, so that the first ribbon was helically wound. While the drum was being rotated, the second head was moved toward a second end of the belt in the axial direction, so that the second ribbon was helically wound. Thus, a band was formed. In example 1, a gap formed between a portion formed of the first ribbon and a portion formed of the second ribbon was located vertically below the reference main groove. This is indicated in cells of "location of gap" in table 1. In example 1, the number of times the first ribbon was wound was six. The number of times the second ribbon was wound was eight. The width W of the main groove was 6.4 mm. The depth of the main groove was 7.8 mm.

### [Comparative example 1]

The first ribbon and the second ribbon were layered such that the end of the first ribbon and the end of the second ribbon were located vertically below the equator of the tire, thereby starting winding of the ribbons. The number of times the first ribbon was wound, and the number of times the second ribbon was wound were each seven. The other conditions were the same as those for example 1. Thus, a tire was produced. In comparative example 1, a gap of the band was located vertically below the equator. Comparative example 1 represented a conventional production method.

### [Comparative example 2]

The first ribbon and the second ribbon were layered such that the end of the first ribbon and the end of the second ribbon were located vertically below a main groove (hereinafter, referred to as a secondary main groove) that is located outwardly of the reference main groove in the axial direction, thereby staring winding of the ribbons. The number of times the first ribbon was wound was four, and the number of times the second ribbon was wound was ten. The other conditions were the same as those for example 1. Thus, a tire was produced. In comparative example 2, a gap of the band was located vertically below the secondary main groove.

### [Uniformity]

A radial force variation (RFVOA, RFV1H) and a radial run out (RRO11H) were measured, in compliance with the uniformity test method defined in "JASO C607:2000", under the following conditions. An average of values obtained by measurements of 20 tires is indicated below in table 1. The less the value is, the more favorable the evaluation is.
Rim width: 5.5 inch
Internal pressure: 200 kPa
Load: 3.67 kN
Speed: 60 rpm

### [Productivity]

Times required for producing the tires were measured. The results are indicated below as indexes in table 1 on the assumption that a value for the comparative example 1 is 100. The less the value is, the more favorable the evaluation is.
[Table 1]

**Table 1 Evaluation results**

| | | Comp. example 1 | Example 1 | Comp. example 2 |
|---|---|---|---|---|
| Structure of tire | | FIG. 1 | FIG. 1 | FIG. 1 |
| Location of gap | | equator | reference main groove | secondary main groove |
| The number of times first ribbon was wound | | 7 | 6 | 4 |
| The number of times second ribbon was wound | | 7 | 8 | 10 |
| Uniformity | RFVOA [N] | 68 | 58 | 60 |
| | RFV1H [N] | 35 | 28 | 30 |
| | RR011H [mm] | 0.31 | 0.20 | 0.21 |
| Productivity | | 100 | 102 | 105 |

As indicated in table 1, the evaluation is higher in the production method of example 1 than in the production methods of comparative examples. The results of the evaluation clearly indicate that the present invention is superior.

The method described above is applicable to production of various tires. The application of the method described herein is merely an exemplary application.

The foregoing description is in all aspects illustrative, and various modifications can be devised without departing from the essential features of the invention.

## Claims

1. A pneumatic tire production method for producing, by using a former, a tire (18) including: a tread (20) having a plurality of main grooves (38a) that extend in a circumferential direction, and that are not formed on a tire equator; a band (30) located inwardly of the tread (20) in a radial direction; and a belt (28) located inwardly of the band (30) in the radial direction, the former including: a rotatable cylindrical drum; a first head (60a), movable in an axial direction, for feeding a first ribbon (52a); and a second head (60b), movable in the axial direction, for feeding a second ribbon (52b), the pneumatic tire production method comprising the steps of:
forming a belt (28) by a sheet being wound around the rotatable cylindrical drum,
layering the first ribbon (52a) fed by the first head (60a) and the second ribbon (52b) fed by the second head, over the belt (28), so as to locate an end of the first ribbon (52a) and an end of the second ribbon (52b) vertically below a reference main groove (38as), wherein the reference main groove (38as) is a main grove closest to the tire equator among the plurality of main grooves (38a); and
helically winding the first ribbon (52a) by the drum being rotated and the first head (60a) being moved toward a first end (50a) of the belt (28) in the axial direction, and helically winding the second ribbon (52b) by the drum being rotated and the second head (60b) being moved toward a second end (50b) of the belt (28) in the axial direction, wherein
each of the first ribbon (52a) and the second ribbon (52b) includes a cord (54) extending in a length direction thereof.

2. The pneumatic tire production method according to claim 1, wherein
in the step of layering the first ribbon (52a) and the second ribbon (52b),
the first ribbon (52a) is layered over the belt (28) such that, at the end (62a) of the first ribbon (52a), an edge (64a) of the first ribbon (52a) on a side of the second end (50b) of the belt (28) is located inwardly of an edge of the reference main groove (38as) on a side of the first end (50a) of the belt (28), in the axial direction, and
the second ribbon (52b) is layered over the belt (28) such that, at the end (62b) of the second ribbon (52b), an edge (64b) of the second ribbon (52b) on a side of the first end (50a) of the belt (28) is located outwardly of an edge of the reference main groove (38as) on a side of the second end (50b) of the belt (28), in the axial direction.

3. The pneumatic tire production method according to claim 1, wherein each of the plurality of main grooves (38a) has a width (W) that is greater than or equal to 5.0 mm, and is not greater than 15.0 mm, and has a depth (D) that is greater than or equal to 6.0 mm, and is not greater than 12.0 mm.

4. A pneumatic tire (18) comprising: a tread (20) having a plurality of main grooves (38a) that extend in a circumferential direction; a band (30) located inwardly of the tread (20) in a radial direction; and a belt (28) located inwardly of the band (30) in the radial direction, wherein
none of the plurality of main grooves (38a) is formed on a tire equator,
the band (30) is formed by using a first ribbon (52a) and a second ribbon (52b),
a main groove closest to the tire equator among the plurality of main grooves (38) is used as a reference main groove (38as),
the first ribbon (52a) and the second ribbon (52b) are layered over the belt (28) such that an end (62a) of the first ribbon (52a) and an end (62b) of the second ribbon (52b) are located vertically below the reference main groove (38as),
the first ribbon (52a) is helically wound around the belt (28) toward a first end (50a) of the belt (28),
the second ribbon (52b) is helically wound around the belt (28) toward a second end (50b) of the belt (28), and
each of the first ribbon (52a) and the second ribbon (52b) includes a cord (54) extending in a length direction thereof.

5. The pneumatic tire according to claim 4, wherein
the band (30) is formed such that,
at the end (62a) of the first ribbon (52a), an edge (64a) of the first ribbon (52a) on a side of the second end (50b) of the belt (28) is located inwardly of an edge of the reference main groove (38as) on a side of the first end (50a) of the belt (28), in an axial direction, and
at the end (62b) of the second ribbon (52b), an edge (64b) of the second ribbon (52b) on a side of the first end (50a) of the belt (28) is located outwardly of an edge of the reference main groove (38as) on a side of the second end (50b) of the belt (28), in the axial direction.

6. The pneumatic tire according to claim 4, wherein each of the plurality of main grooves (38) has a width (W) that is greater than or equal to 5.0 mm, and is not greater than 15.0 mm, and has a depth (D) that is greater than or equal to 6.0 mm, and is not greater than 12.0 mm.

## Patentansprüche

1. Luftreifen-Herstellungsverfahren zum Herstellen, unter Verwendung einer Formungseinrichtung, eines Reifens (18), umfassend: eine Lauffläche (20), die eine Mehrzahl von Hauptrillen (38a) aufweist, die sich in einer Umfangsrichtung erstrecken und die nicht auf dem Reifenäquator gebildet sind; ein Band (30), das innen von der Lauffläche (20) in einer radialen Richtung angeordnet ist; und einen Gürtel (28), der innen von dem Band (30) in der radialen Richtung angeordnet ist, wobei die Formungseinrichtung umfasst: eine drehbare zylindrische Trommel; einen ersten Kopf (60a), der in einer axialen Richtung bewegbar ist, um einen ersten Streifen (52a) zuzuführen; und einen zweiten Kopf (60b), der in der axialen Richtung bewegbar ist, um einen zweiten Streifen (52b) zuzuführen, wobei das Luftreifen-Herstellungsverfahren die Schritte umfasst, dass:
ein Gürtel (28) gebildet wird, indem eine Bahn um die drehbare zylindrische Trommel gewickelt wird,
der erste Streifen (52a), der durch den ersten Kopf (60a) zugeführt wird, und der zweite Streifen (52b), der durch den zweiten Kopf zugeführt wird, über den Gürtel (28) gelegt werden, um ein Ende des ersten Streifens (52a) und ein Ende des zweiten Streifens (52b) vertikal unter einer Bezugshauptrille (38as) anzuordnen, wobei die Bezugshauptrille (38as) eine Hauptrille ist, die sich unter der Mehrzahl von Hauptrillen (38a) am nächsten bei dem Reifenäquator befindet; und
der erste Streifen (52a) wendelförmig gewickelt wird, indem die Trommel gedreht wird und der erste Kopf (60a) zu einem ersten Ende (50a) des Gürtels (28) hin in der axialen Richtung bewegt wird, und der zweite Streifen (52b) wendelförmig gewickelt wird, indem die Trommel gedreht wird und der zweite Kopf (60b) zu einem zweiten Ende (50b) des Gürtels (28) hin in der axialen Richtung bewegt wird, wobei
ein jeder von dem ersten Streifen (52a) und dem zweiten Streifen (52b) einen Kord (54) umfasst, der sich in einer Längsrichtung davon erstreckt.

2. Luftreifen-Herstellungsverfahren nach Anspruch 1, wobei
bei dem Schritt des Legens des ersten Streifens (52a) und des zweiten Streifens (52b)
der erste Streifen (52a) derart über den Gürtel (28) gelegt wird, dass an dem Ende (62a) des ersten Streifens (52a) eine Kante (64a) des ersten Streifens (52a) auf einer Seite des zweiten Endes (50b) des Gürtels (28) innen von einer Kante der Bezugshauptrille (38as) auf einer Seite des ersten Endes (50a) des Gürtels (28) in der axialen Richtung angeordnet ist, und
der zweite Streifen (52b) derart über den Gürtel (28) gelegt wird, dass an dem Ende (62b) des zweiten Streifens (52b) eine Kante (64b) des zweiten Streifens (52b) auf einer Seite des ersten Endes (50a) des Gürtels (28) außen von einer Kante der Bezugshauptrille (38as) auf einer Seite des zweiten Endes (50b) des Gürtels (28) in der axialen Richtung angeordnet ist.

3. Luftreifen-Herstellungsverfahren nach Anspruch 1, wobei eine jede der Mehrzahl von Hauptrillen (38a) eine Breite (W) aufweist, die größer als oder gleich 5,0 mm ist und nicht größer als 15,0 mm ist, und eine Tiefe (D) aufweist, die größer als oder gleich 6,0 mm ist und nicht größer als 12,0 mm ist.

4. Luftreifen (18), umfassend: eine Lauffläche (20), die eine Mehrzahl von Hauptrillen (38a) aufweist, die sich in einer Umfangsrichtung erstrecken; ein Band (30), das innen von der Lauffläche (20) in einer radialen Richtung angeordnet ist; und einen Gürtel (28), der innen von dem Band (30) in der radialen Richtung angeordnet ist, wobei
keine der Mehrzahl von Hauptrillen (38a) auf einem Reifenäquator gebildet ist,
das Band (30) unter Verwendung eines ersten Streifens (52a) und eines zweiten Streifens (52b) gebildet ist,
eine Hauptrille, die sich unter der Mehrzahl von Hauptrillen (38) am nächsten bei dem Reifenäquator befindet, als eine Bezugshauptrille (38as) verwendet wird,
der erste Streifen (52a) und der zweite Streifen (52b) derart über den Gürtel (28) gelegt sind, dass ein Ende (62a) des ersten Streifens (52a) und ein Ende (62b) des zweiten Streifens (52b) vertikal unter der Bezugshauptrille (38as) angeordnet sind,
der erste Streifen (52a) wendelförmig um den Gürtel (28) zu dem ersten Ende (50a) des Gürtels (28) hin gewickelt ist,
der zweite Streifen (52b) wendelförmig um den Gürtel (28) zu einem zweiten Ende (50b) des Gürtels (28) hin gewickelt ist, und
ein jeder von dem ersten Streifen (52a) und dem zweiten Streifen (52b) einen Kord (54) umfasst, der sich in einer Längsrichtung davon erstreckt.

5. Luftreifen nach Anspruch 4, wobei
das Band (30) derart gebildet ist, dass
an dem Ende (62a) des ersten Streifens (52a) eine Kante (64a) des ersten Streifens (52a) auf einer Seite des zweiten Endes (50b) des Gürtels (28) innen von einer Kante der Bezugshauptrille (38as) auf einer Seite des ersten Endes (50a) des Gürtels (28) in einer axialen Richtung angeordnet ist, und
an dem Ende (62b) des zweiten Streifens (52b) eine Kante (64b) des zweiten Streifens (52b) auf einer Seite des ersten Endes (50a) des Gürtels (28) außen von einer Kante des Bezugshauptrille (38as) auf einer Seite des zweiten Endes (50b) des Gürtels (28) in der axialen Richtung angeordnet ist.

6. Luftreifen nach Anspruch 4, wobei eine jede von der Mehrzahl von Hauptrillen (38) eine Breite (W) aufweist, die größer als oder gleich 5,0 mm ist und nicht größer als 15,0 mm ist, und eine Tiefe (D) aufweist, die größer als oder gleich 6,0 mm ist und nicht größer als 12,0 mm ist.

## Revendications

1. Procédé de production de bandage pneumatique pour produire, en utilisant un dispositif de formage, un pneumatique (18) incluant : une bande de roulement (20) ayant une pluralité de rainures principales (38a) qui s'étendent dans une direction circonférentielle, et qui ne sont pas formées sur un équateur du pneumatique ; une bande (30) située à l'intérieur de la bande de roulement (20) dans une direction radiale ; et une ceinture (28) située à l'intérieur de la bande (30) dans la direction radiale, le dispositif de formage incluant : un tambour cylindrique rotatif ; une première tête (60a), déplaçable dans une direction axiale, pour alimenter un premier ruban (52a) ; et une seconde tête (60b), déplaçable dans la direction axiale, pour alimenter un second ruban (52b), le procédé de production de bandage pneumatique comprenant les étapes consistant à :
former une ceinture (28) par une feuille que l'on enroule autour du tambour cylindrique rotatif,
poser le premier ruban (52a) alimenté par la première tête (60a) et le second ruban (52b) alimenté par la seconde tête, sous forme de couches par-dessus la ceinture (28), de manière à localiser une extrémité du premier ruban (52a) et une extrémité du second ruban (52b) verticalement au-dessous d'une rainure principale de référence (38as), dans lequel la rainure principale de référence (38as) est une rainure principale la plus proche de l'équateur du pneumatique parmi la pluralité de rainures principales (38a) ; et
enrouler en hélice le premier ruban (52a) en mettant le tambour en rotation et en déplaçant la première tête (60a) vers une première extrémité (50a) de la ceinture (28) dans la direction axiale, et enrouler en hélice le second ruban (52b) en mettant le tambour en rotation et en déplaçant la seconde tête (60b) vers une seconde extrémité (50b) de la ceinture (28) dans la direction axiale, dans lequel
chacun du premier ruban (52a) et du second ruban (52b) inclut un câblé (54) s'étendant dans une direction en longueur de celui-ci.

2. Procédé de production de bandage pneumatique selon la revendication 1, dans lequel
dans l'étape consistant à poser le premier ruban (52a) et le second ruban (52 b) sous forme de couche,
le premier ruban (52a) est posé en couche par-dessus la ceinture (28) de telle façon qu'à l'extrémité (62a) du premier ruban (52a) une bordure (64a) du premier ruban (52a) sur un côté de la seconde extrémité (50b) de la ceinture (28) est située vers l'intérieur d'une bordure de la rainure principale de référence (38as) sur un côté de la première extrémité (50a) de la ceinture (28), dans la direction axiale, et
le second ruban (52b) est posé en couche par-dessus la ceinture (28) de telle façon qu'à l'extrémité (62b) du second ruban (52b) une bordure (64b) du second ruban (52b) sur un côté de la première extrémité (50a) de la ceinture (28) est située vers l'extérieur d'une bordure de la rainure principale de référence (38as) sur un côté de la seconde extrémité (50b) de la ceinture (28), dans la direction axiale.

3. Procédé de production de bandage pneumatique selon la revendication 1, dans lequel chacune de la pluralité de rainures principales (38a) a une largeur (W) qui est supérieure ou égale à 5,0 mm, et qui ne dépasse pas 15,0 mm, et une profondeur (D) qui est supérieure ou égale à 6,0 mm, et qui ne dépasse pas 12,0 mm.

4. Bandage pneumatique (18) comprenant : une bande de roulement (20) ayant une pluralité de rainures principales (38a) qui s'étendent dans une direction circonférentielle ; une bande (30) située à l'intérieur de la bande de roulement (20) dans la direction radiale ; et une ceinture (28) située à l'intérieur de la bande (30) dans la direction radiale, dans lequel
aucune de la pluralité de rainures principales (38a) n'est formée sur un équateur du pneumatique,
la bande (30) est formée en utilisant un premier ruban (52a) et un second ruban (52b),
une rainure principale la plus proche de l'équateur du pneumatique, parmi la pluralité de rainures principales (38), est utilisée à titre de rainure principale de référence (38as),
le premier ruban (52a) et le second ruban (52b) sont posés en couches par-dessus la ceinture (28) de telle façon qu'une extrémité (62a) du premier ruban (52a) et une extrémité (62b) du second ruban (52b) sont localisées verticalement au-dessous de la rainure principale de référence (38as),
le premier ruban (52a) est enroulé en hélice autour de la ceinture (28) vers une première extrémité (50a) de la ceinture (28),
le second ruban (52b) est enroulé en hélice autour de la ceinture (28) vers une seconde extrémité (50b) de la ceinture (28), et
chacun du premier ruban (52a) et du second ruban (52b) inclut un câblé (54) s'étendant dans une direction longitudinale de celui-ci.

5. Bandage pneumatique selon la revendication 4, dans lequel la bande (30) est formée de telle façon que
à l'extrémité (62a) du premier ruban (52a), une bordure (64a) du premier ruban (52a) sur un côté de la seconde extrémité (50b) de la ceinture (28) est localisée à l'intérieur d'une bordure de la rainure principale de référence (38as) sur un côté de la première extrémité (50a) de la ceinture (28), dans une direction axiale, et
à l'extrémité (62b) du second ruban (52b), une bordure (64b) du second ruban (52b) sur un côté de la première extrémité (50a) de la ceinture (28) est localisée à l'extérieur d'une bordure de la rainure principale de référence (38as) sur un côté de la seconde extrémité (50b) de la ceinture (28), dans la direction axiale.

6. Bandage pneumatique selon la revendication 4, dans lequel chacune de la pluralité de rainures principales (38) a une largeur (W) qui est supérieure ou égale à 5,0 mm, et qui n'est pas plus grande que 15,0 mm, et a une profondeur (D) qui est supérieure ou égale à 6,0 mm, et qui n'est pas plus grande que 12,0 mm.
